(19) Europäisches Patentamt
European Patent Office
Office européen des brevets

(11) EP 2 645 329 A1

## (12) EUROPEAN PATENT APPLICATION

(43) Date of publication:
02.10.2013 Bulletin 2013/40

(51) Int Cl.:
*G06T 7/00* (2006.01)

(21) Application number: 12161559.5

(22) Date of filing: 27.03.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Westfälische Wilhelms-Universität Münster
48149 Münster (DE)

(72) Inventors:
• Tenbrinck, Daniel
  48143 Münster (DE)
• Stypmann, Jörg
  48161 Münster (DE)
• Jiang, Xiaoyi
  48161 Münster (DE)

(74) Representative: Ullrich & Naumann
Patent- und Rechtsanwälte
Schneidmühlstrasse 21
69115 Heidelberg (DE)

(54) **Method and system for image segmentation**

(57)     A method for image segmentation, in particular ultrasound image segmentation, comprising:
acquiring an image data set that comprises intensity values $I$ for an array of pixels representing said image, wherein said image data originates from two or more different signal sources that respond with different signal intensity distributions,
is characterized in the further steps of
determining noise-dependent intensity thresholds $t_d$ for separating said intensity values $I$ in individual classes $C_i$,
with each class $C_i$ corresponding to a particular of said different signal intensity distributions,
calculating segmentation contours $C$ by means of level set equations, wherein the corresponding velocity vectors $\bar{v}$ that determine the movement of said segmentation contours $C$ depend on the deviation of said intensity values $I$ from said noise-dependent intensity thresholds $t_d$.

Furthermore, a corresponding system and a computer program product suitable for effecting the performance of the above method are disclosed.

Fig. 3

EP 2 645 329 A1

**Description**

The present invention relates to a method for image segmentation, in particular ultrasound image segmentation, comprising:

acquiring an image data set that comprises intensity values I for an array of pixels representing said image, wherein said image data originates from two or more different signal sources that respond with different signal intensity distributions.

The present invention further relates to a system for image segmentation, in particular ultrasound image segmentation, comprising
means for acquiring an image data set that comprises intensity values I for an array of pixels representing said image, wherein said image data originates from two or more different signal sources that respond with different signal intensity distributions.

Furthermore, the present invention relates to a computer program product suitable for effecting the performance of such a method.

Segmentation is an essential technique for digital image analysis. Generally, segmentation techniques aim at partitioning an image into two (or more) segments, such that the pixels within one segment share certain characteristics, e.g., that they are similar with respect to their intensity. In fact, by doing so, pixels of an image that belong to different signal sources can be separated from each other. For instance, in case of medical imaging there are typically two different sources of signal: Reflecting tissue responds with high signal intensity, whereas liquids like blood induce low signal intensity. Consequently, in such cases segmentation is an important tool which is typically used to automatically locate objects within a patient's body, like organs, tumors, pathologic tissue, etc., and to accurately determine the boundaries of these objects. For instance, in the field of echocardiography segmentation is used to assess medical parameters of the cardiovascular system. Information like left ventricular (LV) volume or the ejection fraction of LV can be calculated by segmenting data sets from ultrasound examinations of a patient's myocardium.

Segmentation techniques known in prior art include manual segmentation as well as semi-automated and automated segmentation. Manual techniques suffer from the shortcoming that they are not only time-consuming and cumbersome, but also require profound experience. As a consequence, manual segmentation results often include incorrectly  identified structures, in particular in case of noisy image data. Moreover, results strongly depend on the person, who has been analyzing the image data, and on his/her individual skills.

Regarding automated segmentation techniques, it can be noted that in the last two decades level set methods became a popular method to solve a variety of automatic segmentation problems. Level Set methods (and also Active Contours and Snake models) are based on the basic idea of evolving a closed contour in a given image. Since its initial proposition by Osher and Sethian in 1988 (Osher, S., Sethian, J.A.: Fronts Propagating with Curvature-Dependent Speed: Algorithms Based on Hamilton-Jacobi Formulations. J. Comp. Phys. 79, 12-49, 1988) level set methods have established themselves as a sophisticated framework for different segmentation applications. For level set methods this contour motion is specified by a partial differential equation (PDE), sometimes denoted as 'level set equation'.

Most of the currently known algorithms can be divided into a group using image gradients and methods that are based on region features, e.g. intensity values, shape priors or texture information. Although image gradients are a popular feature for segmentation which, generally, constitute a powerful and versatile technique, their use in ultrasound imaging is restricted because the speckle noise produces wrong gradient information throughout the image and thus results in unwanted segmentation results. As a consequence, depending on the image quality accurate segmentation might be a hard task. Even with the application of sophisticated segmentation techniques, like level set methods mentioned above, the problem still remains so that in case of poor image quality segmentation often does not produce satisfying results. For instance, this can be observed in case of segmentation of ultrasound data, which is difficult to realize due to low contrast, shadowing effects, and speckle noise.

It is therefore an object of the present invention to improve and further develop a method and a system for image segmentation of the initially described type in such a way that segmentation results are improved, in particular in case of analyzing images of inferior image quality.

In accordance with the invention, the aforementioned object is accomplished by a method comprising the features of claim 1. According to this claim such a method is characterized in the further steps of
determining noise-dependent intensity thresholds $t_d$ for separating said intensity values I in individual classes $C_i$, with each class $C_i$ corresponding to a particular of said different signal intensity distributions,
calculating segmentation contours C by means of level set equations, wherein the corresponding velocity vectors $\vec{v}$ that determine the movement of said segmentation contours C depend on the deviation of said intensity values I from said noise-dependent intensity thresholds $t_d$.

Furthermore, the aforementioned object is accomplished by a system comprising the features of claim 12 according to which such system is characterized in further comprising a processor operable

to determine noise- dependent intensity thresholds $t_d$ for separating said intensity values $I$ in individual classes $C_i$, with each class $C_i$ corresponding to a particular of said different signal intensity distributions, and

to calculate segmentation contours $C$ by means of level set equations, wherein the corresponding velocity vectors $\vec{v}$ that determine the movement of said segmentation contours $C$ depend on the deviation of said intensity values $I$ from said noise- dependent intensity thresholds $t_d$.

A computer program product suitable for effecting performance of the invention is characterized in claim 15.

According to the invention it has first been recognized that the main reason why prior art approaches have proven to not adequately effect segmentation of certain kinds of images is that they (implicitly) employ an inappropriate segmentation threshold. It has been further recognized that segmentation results can be significantly improved by employing an optimal segmentation threshold that adapts itself to the respective image's inherent noise character. In other words, the present invention proposes a noise-dependent intensity threshold, wherein the noise dependency effects intensity shifts of the threshold in case the noise has an intensity dependent component. In this regard the segmentation threshold according to the present invention can be regarded as a histogram-based threshold.

In order to perform accurate segmentation, the present invention employs a level set method for determining a segmentation contour, wherein the movement of the segmentation contour is determined by the corresponding velocity vector of the level set equation. According to the present invention image information is incorporated into this velocity vector in such a way that it includes a component that considers deviations of intensity values from the noise-dependent intensities threshold described above. By this means, a definition of the velocity vector is realized that depends on the noise behavior of the image under consideration. Insofar, compared to prior art solutions the present invention proposes a more sophisticated separation method, which is incorporated into a specific intensity-based level set formulation. As a consequence, an optimal adaptation of the segmentation process to the respective noise characteristic of the image is achieved, which results in a significant improvement of the quality of segmentation results.

As will be appreciated by those of skill in the art, in case of separating signal intensity distributions that originate from only two different signal sources, only a single noise-dependent intensity threshold $t_d$ will be determined, which separates the intensity values $I$ of the image pixels in two classes $C_0$ and $C_1$. Correspondingly, only a single segmentation contour $C$ has to be calculated by means of a single level set equation. However, it is to be understood that in case of more than two different signal intensity distributions, the number of intensity thresholds $t_d$, segmentation contours and level set equation increases accordingly. Although hereinafter these expressions are continuously employed in their singular forms, this is only made for reasons of simplicity and clarity, however, without limiting the invention to the case of a two class separation. It is expressly pointed out that the present invention can be applied to any number of classes to be separated.

According to a preferred embodiment the intensity values for the array of pixels representing the image comprise a multiplicative noise component. Multiplicative noise is inherent to imaging techniques like radar or ultrasound imaging, and it appears as speckle noise having a signal-dependent form. A prominent prior art segmentation technique, which is the Chan-Vese algorithm as described in Chan, T.F., Vese, L.A.: Active Contours Without Edges. IEEE-TIP 10(2), 266-277, 2001, has severe trouble to correctly segment such data. Generally, this behavior is typical for the class of methods that do not consider the multiplicative nature of noise inherent in, e.g., ultrasound data, since ignoring this fundamental fact tends to produce bad segmentation results. In contrast, since in accordance with the present invention the segmentation threshold is determined in a noise-dependent fashion, i.e. depending on the inherent noise statistics of the image, an optimal adaptation to multiplicative noise can be achieved. Assuming fixed signal sources, with increasing noise variance the adapted segmentation threshold will shift to lower intensity values. This is in strong contrast to segmentation thresholds employed in prior art solutions that are independent of the signal deviation, which suffer from the problem of misclassification of pixels in presence of multiplicative noise.

In order to challenge the problem of misclassification of pixels, in particular due to multiplicative noise, the selection of an optimal noise-dependent intensity threshold $t_d$ is of utmost importance. In a specific embodiment, optimal may refer to a threshold $t_d$ being determined in such a way that the within-class variance is minimized and simultaneously the between-class variance is maximized. Advantageously, this may be done by discriminant analysis.

According to a preferred embodiment the segmentation contour may be evolved over time as zero-level set of an auxiliary function $\Phi$ having a higher dimension than the array of pixels representing the image. For instance, in the case of a two-dimensional image, the auxiliary function $\Phi$ would be defined in such a way that its graph is a three-dimensional surface, having positive values on one side of the segmentation contour and negative values on the other side. Therefore, the segmentation contour, given as zero-level set of an implicit function, can be changed/deformed over time by simply deforming the function $\Phi$.

With respect to an efficient implementation it may be provided that a transfer function based on the image grayscale intensities is defined, which forces the segmentation contour to expand and/or contract. For instance, for values of the transfer function > 0 the segmentation contour may contract, while for values < 0 it may expand. Advantageously, the transfer function depends on the distance of the pixel's intensity to the respective noise-dependent intensity threshold. More specifically, the transfer function may include a term of the form $t_d - I(x)$, for instance, where $t_d$ denotes the noise-dependent intensity threshold and $I(x)$ the pixel's intensity. The weight of this term as part of the level set equation can be adapted to specific conditions of the respective application, e.g. by squaring the term. Selection means may be provided that allow a user of the imaging system to select the specific form of the transfer function.

With respect to further improving the quality of segmentation results it may be provided that the smoothness of the segmentation contour is controlled by a weighting factor introduced for the mean curvature of the segmentation contour. In a specific embodiment the weighting factor may be selected by a user of the imaging system.

In order to keep the computing time low the level set equation may be solved by means of numerical discretization and a predetermined number of iterations. The maximum number of iteration counts may either be predetermined or may be selectable by a user of the imaging system. In the case of convergence the algorithm may be automatically terminated.

In a specific embodiment the array of pixels representing the image may be a two-dimensional array of pixels. In this case the above-mentioned auxiliary function would have to be implemented as a two-dimensional function over time, i.e. with a temporal component as third dimension. In addition, 3D images, i.e. images consisting of a three-dimensional array of pixels, may be analyzed. In this case the auxiliary function would have to be a function in four dimensions (three spatial dimensions and one temporal dimension). It is even possible to perform the segmentation on a four-dimensional array of pixels including temporal information. 4D datasets may help to improve anatomical consistency of segmentation over time. In particular, the temporal information helps to tackle effects like shadowing and low contrast boundaries.

The advantages of the present invention become particularly evident in segmentations of cardiographic ultrasound images, in particular on ultrasound images of a patient's myocardium and cardiac cavities. On the one hand this is the case because ultrasound imaging is one of the most prominent members of imaging techniques in which noise of multiplicative nature is prevalent, and on the other hand because the heart is a rather complex human organ, subject to complex motion. Thus, in these cases the improved segmentation technique according to the present invention has an enormous potential in computer aided diagnosis and treatment, since it reveals much more anatomical details than conventional segmentation techniques do, which implicitly employ a constant segmentation threshold. However, it is important to note that the application of the present invention is not restricted to cardiographic ultrasound images. Generally, the present invention can be employed for many different applications in imaging tasks having an inherent intensity-dependent noise structure, e.g. mammography or SAR (Synthetic Aperture Radar).

In a clinical environment the present invention helps the physician to save time by semi- or full-automatic segmentation of cardiac ultrasound images and thus supports an easier and more time-efficient interpretation of these images. This results in a better clinical standard in general.

There are several ways how to design and further develop the teaching of the present invention in an advantageous way. To this end, it is to be referred to the patent claims subordinate to patent claims 1 and 12 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing

Fig. 1    is a diagram showing the effect of additive noise on the intensity distribution in an image histogram,

Fig. 2    is a diagram showing the effect of multiplicative noise on the intensity distribution in an image histogram,

Fig. 3    is a diagram showing the difference between noise-dependent and noise-independent segmentation thresholds,

Fig. 4    is a diagram showing the influence of noise variance $\sigma$ on noise-dependent intensity thresholds,

Fig. 5    is a schematic view of an ultrasound imaging system according to an embodiment of the present invention,

Fig. 6    shows various segmentation results obtained on a software phantom with simulated multiplicative speckle noise,

Fig. 7    shows various segmentation results obtained on 2D cardiac ultrasound images, and

Fig. 8    shows segmentation results obtained on 3D cardiac ultrasound images.

For reasons of simplicity and clarity, the embodiments of the present invention, which are described in detail hereinafter, have been chosen to relate to cases in which signal intensity distributions are present that originate from only two different signal sources. More specifically, this means that only a single noise-dependent intensity threshold $t_d$ has to be determined, which separates the intensity values $I$ of the array of pixels representing the image to be analyzed

in two classes $C_0$ and $C_1$. Correspondingly, only a single segmentation contour $C$ has to be calculated by means of a single level set equation.

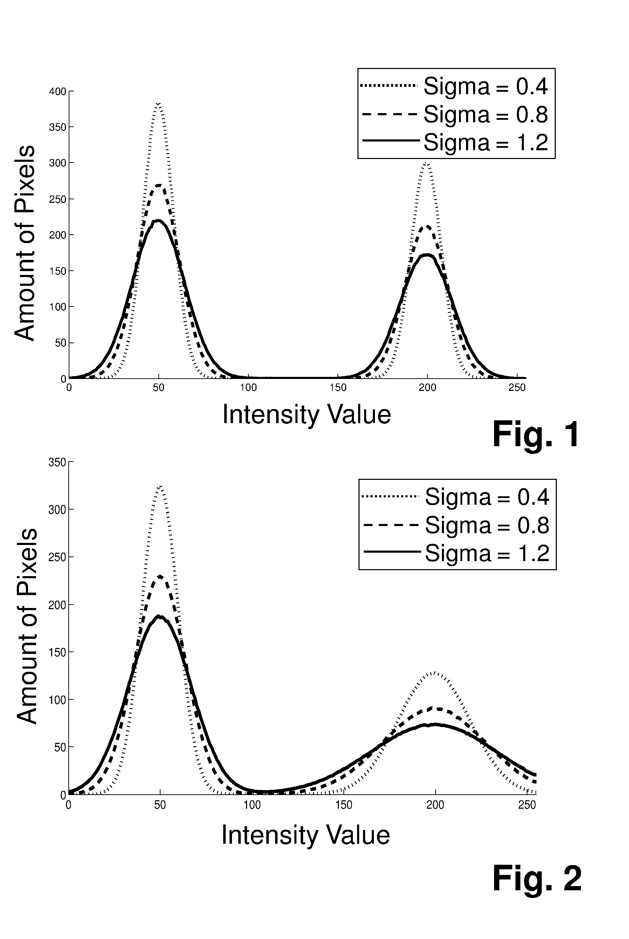

However, those of skill in the art will appreciate that the techniques described in detail below for separating two signal intensity classes $C_0$ and $C_1$ can be easily adapted for the case of separating three or even more signal intensity classes $C_0$, $C_1$, ..., $C_j$ from each other. In some aspects, this may be accomplished by adopting the approach proposed by T. Chan and T. Vese in "A multiphase level set framework for image segmentation using the Mumford and Shah Model", Int. Journal of Computer Vision 50 (3), p. 271- 293, 2002, which is incorporated herein by way of reference. As described in section 2. of the document, a coding is introduced that identifies the individual segments (or regions) to be separated. In a specific embodiment, the coding may be a binary coding which means that in order to separate a number of n different signals (i.e. different segments or regions) a number of $\log_2 n$ auxiliary functions $\Phi$ is needed for evolving corresponding segmentation contours. For instance, as illustrated in Figure 2 of the above mentioned document, by way of employing two functions $\Phi_1$ and $\Phi_2$, it is possible to segment four different regions. Based on this, a skilled person will understand that the mathematical approaches that are described hereinafter in connection with the embodiments illustrated in the Figs. for the case of n=2 can be adapted straightforward to cases with n ≥ 2. Although- in principle- n can be any integer, in many practical application scenarios in which image segmentation is typically applied, n will have a value of, e.g., 3 or 4.

Fig. 1 shows an image histogram of a typical intensity distribution of an image taken from an object that comprises two different signal sources, with the noise component being of additive nature. Due to this additive character the noise is independent of the signal intensity, having the effect that the grayscale distribution of the low intensity peak and of the high intensity peak gets spread out in the same way. This effect is illustrated in Fig. 1 for Gaussian distributed random noise with three different standard deviations ($\sigma$ = 0.4, 0.8 and 1.2).

However, in various imaging techniques, for instance in radar, SAR (Synthetic Aperture Radar), and ultrasound imaging, speckle noise is a known phenomenon, which- in contrast to the additive noise described above in connection with Fig. 1- has a signal- dependent form. In this case an image degradation process is caused that can be modeled by:

$$\tilde{I}(x) = I(x) + s_\sigma(x) \cdot \sqrt{I(x)}$$

Here, $I$ is the unbiased image, $s$ is Gaussian distributed random noise with mean 0 and standard deviation $\sigma$, and $\tilde{I}$ is the observed image. This multiplicative noise leads to distortions in the image, especially in regions with high intensities.

In medical imaging, for instance in ultrasound imaging, one can typically assume to have two sources of signals of interest in the image: Reflecting tissue that responds with high signal intensities and liquids like blood that induce low signal intensities. The effect of speckle noise modeled in the above equation on the intensity histogram is illustrated in Fig. 2. As can be clearly seen in Fig. 2, in regions with high intensity values the grayscale distribution gets spread out much wider than in regions with low intensity values. This fact makes it more difficult to separate the two distributions in comparison with an additive noise source, as illustrated in Fig. 1, especially in the overlapping areas in the histogram.

The present invention deals with this kind of noise phenomena, i.e. with noise being dependent on the signal intensity. As will be shown later, simple separation schemes, which are based only on the estimated expectation values of the corresponding signals, result in partial misinterpretation of image data that contain multiplicative noise components, like the data of ultrasound images. To improve segmentation results of such images, the present invention proposes a more sophisticated separation method and incorporates this into a level set formulation.

To illustrate the problems of prior art applications of level set methods in presence of multiplicative noise in detail, the popular approach of Chan-Vese (Chan, T.F., Vese, L.A.: Active Contours Without Edges. IEEE-TIP 10(2), 266-277, 2001) is considered exemplarily as a representative of a class of methods based on the minimal partition model of Mumford-Shah. The energy functional to be minimized in accordance with the Chan-Vese approach is defined by:

$$F(c_1, c_2, \Phi) = \mu \int_\Omega \delta_0\big(\Phi(x)\big) \big| \nabla \Phi(x) \big| dx + \nu \int_\Omega H\big(\Phi(x)\big) dx$$

$$+ \lambda_1 \int_\Omega \big| u_0(x) - c_1 \big|^2 H\big(\Phi(x)\big) dx + \lambda_2 \int_\Omega \big| u_0(x) - c_2 \big|^2 \big(1 - H\big(\Phi(x)\big)\big) dx$$

Here, $\Phi: \Omega \to$ R represents a Lipschitz function, $\Omega$ the image space, $H$ the Heavyside function, $\delta_0$ the one-dimensional Dirac measure, and $u_0$ the image to be segmented. The contour $C$ is given by $\Phi = 0$ and the minimization of the energy functional is calculated iteratively and should lead to a segmentation of the image $u_0$.

For the sake of discussion simplicity it is first assumed $\lambda_1 = \lambda_2 = 1$. Without loss of generality it is further assumed $c_1 < c_2$ (i.e. dark object and bright background) in this context. The most important part of the above equation is the data term

$$\left| u_0(x) - c_1 \right|^2 H\big(\Phi(x)\big) + \left| u_0(x) - c_2 \right|^2 (1 - H\big(\Phi(x)\big)),$$

which penalizes the deviation of a pixel value $u_0(x)$ to the average intensity values $c_1$ and $c_2$ inside and outside the contour, respectively. It is obvious that the data term gets minimal if all intensity values smaller than a threshold $t_c = (c_1 + c_2)/2$ are assigned to the object and all other intensity values are assigned to the background. This can also be seen by using the corresponding Euler-Lagrange equation according to the Chan-Vese approach:

$$\frac{\partial \Phi}{\partial t} = \delta_\varepsilon(\Phi)\left[ \mu \cdot \mathrm{div}\left( \frac{\nabla \Phi}{|\nabla \Phi|} \right) - (u_0 - c_1)^2 + (u_0 - c_2)^2 \right]$$

$$= \delta_\varepsilon(\Phi)\left[ \mu \cdot \mathrm{div}\left( \frac{\nabla \Phi}{|\nabla \Phi|} \right) - 2(c_2 - c_1)\left( u_0 - \frac{c_1 + c_2}{2} \right) \right] = 0$$

The threshold $t_c = (c_1 + c_2)/2$ is set at half distance between the average intensities $c_1$ and $C_2$, and represents an optimal choice for segmentation algorithms based on an additive noise model. This is illustrated in Fig. 1, where $t_c = 125$ optimally separates the two signal distributions.

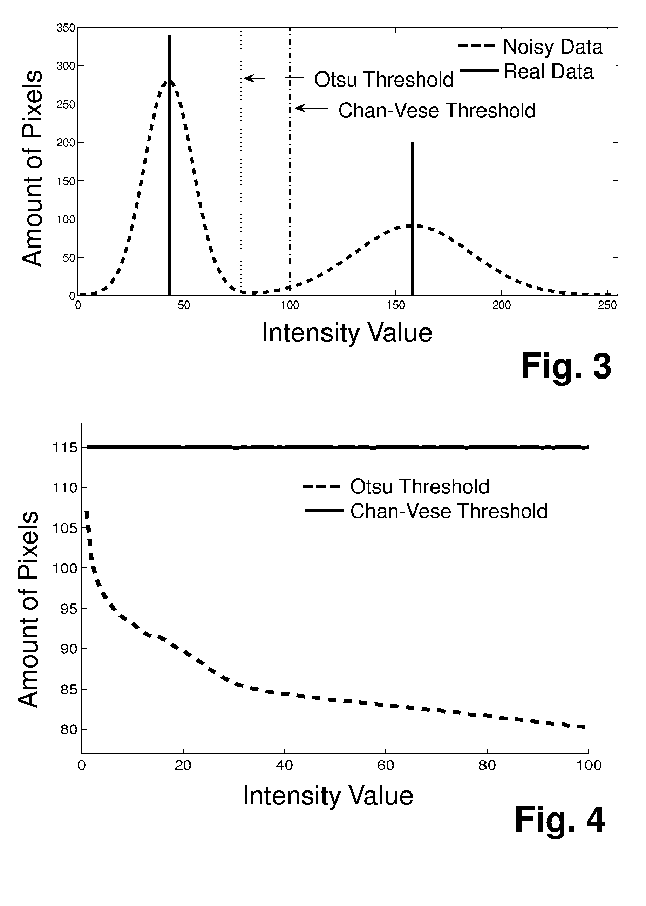

The situation in presence of multiplicative noise, as illustrated in Fig. 2, is completely different. The optimal threshold to separate the signal distributions clearly can not be $t_c$ any more. Instead, the broader distribution of the bright signal enforces a shift of the optimal threshold to the left side of the histogram as also illustrated in Fig. 3.

In general, the present invention aims at determining a histogram-based threshold that minimizes the total classification error for different signal distributions, which can then be incorporated into a specifically adapted level set segmentation algorithm. In case of additive noise the threshold is simply $t_c$ as defined above. According to a preferred embodiment of the present invention an optimal threshold to deal with multiplicative noise can be determined by means of discriminant analysis, as will be explained in detail hereinafter.

Let $N$ denote the number of pixels of a given grayscale image and let $H$ be the normalized histogram of this image. Then, $H$ can be seen as a probability distribution with $H(i) = p_i$ being the probability of intensity value $i$. A threshold $t \in N$, $0 < t < 255$, induces two intensity classes $C_0$ and $C_1$. By denoting the average intensity value of all pixels of the entire image by $m$ and the average intensity value of $C_0$ and $C_1$ by $m_0$ and $m_1$, respectively, the intraclass variances are simply:

$$\sigma_0^2(t) = \sum_{i=0}^{t} (i - m_0(t))^2, \quad \sigma_1^2(t) = \sum_{i=t+1}^{255} (i - m_1(t))^2\, p_i.$$

Then, the within-class variance $\sigma_W$ and the between-class variance $\sigma_B$ can be defined by

$$\sigma_W(t) = P_0 \sigma_0^2(t) + P_1 \sigma_1^2(t), \quad \sigma_B(t) = P_0 (m_0(t) - m)^2 + P_1 (m_1(t) - m)^2$$

where $P_0 = \sum_{i=0}^{t} p_i$ and $P_1 = \sum_{i=t+1}^{255} p_i$ represent the relative portion of each class.

Now the optimal threshold corresponds to one that maximizes

$$\lambda(t) = \frac{\sigma_B(t)}{\sigma_W(t)}\,.$$

That is, the optimal threshold $t_d$ should minimize the within-class variance and maximize the between-class variance. One can now obtain the optimal threshold by computing $t_d$ = argmax $\lambda(t)$. In this respect, it is noted that this discriminant analysis corresponds to the popular Otsu thresholding method, as described in Otsu, N.: A Threshold Selection Method from Gray-Level Histograms, in IEEE-TSMC 9(1), 62-66 (1979). In particular, Otsu has shown that minimizing $\sigma_W$ and maximizing $\sigma_B$ can be achieved simultaneously, since $\sigma_B + \sigma_W$ equals to the overall variance of the image.

Fig. 4 illustrates how the threshold $t_d$, in Fig. 4 denoted "Otsu-threshold", adapts itself to multiplicative noise. With increasing noise variance the computed optimal threshold $t_d$ shifts to lower intensity values, i.e. to the left side of histogram, in contrast to the constant threshold $t_c$ described above, in Fig. 4 denoted "Chan-Vese-threshold". As can be clearly seen in Fig. 3, using the threshold $t_c$ can lead to misclassification of intensity values, which originally correspond to the signal source on the right side. Because of these observations, according to a preferred embodiment of the present invention, the threshold $t_d$ will be incorporated into a level set method, as will be explained in detail hereafter.

In accordance with the present invention a PDE (Partial Differential Equation) is formulated for an intensity-based segmentation of a given image, e.g. an ultrasound image, using level set methods. The following description will be given for the 2D case. Its extension to the 3D and 4D case is straightforward.

Let $\Phi: \Omega \to$ R be a Lipschitz function, with the segmentation contour to be determined being implicitly given by the zero-level set $C$. To evolve $C$ over time, the equation $\Phi(x, y, t) = 0$ will be used. Now the level set equation can be derived as follows:

$$V(x, y, t) \cdot \nabla_x \Phi(x, y, t) + \Phi_t(x, y, t) = 0\,.$$

According to the present invention information about the noise behavior contained in the image data is incorporated into the velocity vector $V$, which determines the movement of the segmentation contour $C$. In a specific embodiment the velocity vector $V$ may be chosen following the basic principles of the Chan-Vese formulation as described above, however, with the fundamental difference that a noise-dependent threshold term $t_d$ is employed. Let $\Psi: \Omega \to$ R denote the transfer function based on the image grayscale intensities which forces the contour $C$ to expand and/or contract in the normal direction. This function $\Psi$, which for instance may be defined as $\Psi(x) = t_d - I(x)$, depends on the distance of a pixel' s intensity to the optimal threshold $t_d$. For $\Psi(x, y) > 0$ the contour contracts, while for $\Psi(x, y) < 0$ it expands. The counterpart in the Chan-Vese formulation is the - static - threshold term

$$2(c_2 - c_1)\left(u_0 - \frac{c_1 + c_2}{2}\right)$$

of the corresponding Euler-Lagrange equation mentioned above.

According to a preferred embodiment a parameter $\alpha \in [0,1]$ is introduced that controls the smoothness of the segmentation contour $C$ by weighting the mean curvature $\kappa = \nabla \cdot (\nabla \Phi / |\nabla \Phi|)$ This results in a velocity vector $V$ as follows:

$$V = (\alpha \cdot \Psi(x, y) + (1 - \alpha) \cdot \kappa(x, y, t))\frac{\nabla \Phi}{|\nabla \Phi|}$$

This leads to the following PDE:

$$(\alpha \cdot \Psi(x,y) + (1-\alpha) \cdot \kappa(x,y,t)) \left| \nabla \Phi(x,y,t) \right| + \Phi_t(x,y,t) = 0.$$

In order to evolve the segmentation contour $C$ and compute a solution for the above equation a numerical discretization of the PDE may be performed. In a specific embodiment a forward Euler time discretization may be used as follows:

$$\Phi^{t+1} = \Phi^t - \Delta t(\alpha \cdot \Psi + (1-\alpha) \cdot \tilde{\kappa})|D_u\Phi|$$

One can choose $\Phi(x) = \pm\|x - x_0\|$ as a signed distance function with $x_0$ as the nearest pixel on the contour $C$ and $|\nabla\Phi| = 1$. After a fixed number of iterations $\Phi$ may be reinitialized to a signed distance function. For reinitialization the reinitialization equation disclosed in Osher, S., Fedkiw, R.P.: Level Set Methods and Dynamic Implicit Surfaces. Springer-Verlag, New York (2003) may be used. To approximate the hyperbolic data term $\alpha \cdot \Psi(x, y) |\nabla\Phi(x, y, t)|$ an upwind scheme as also described in the above-mentioned publication may be employed.

The parabolic term $\kappa$ may be discretized using second-order central differences, which leads to the following iterative scheme:

$$\Phi^{t+1} = \Phi^t - \Delta t(\alpha \cdot \Psi + (1-\alpha) \cdot \tilde{\kappa})|D_u\Phi|$$

$$\tilde{\kappa} = -\frac{\tilde{\Phi}_{xx}\tilde{\Phi}_y^2 - 2\tilde{\Phi}_x\tilde{\Phi}_y\tilde{\Phi}_{xy} + \tilde{\Phi}_{yy}\tilde{\Phi}_x^2}{\left(\tilde{\Phi}_x^2 + \tilde{\Phi}_y^2\right)^{3/2}}$$

Here $\tilde{\Phi}_x$ and $\tilde{\Phi}_{xx}$ are the central difference approximations of the first and second derivative of $\Phi$ in x-direction with spatial step width $\Delta x$. For the relevant purposes with respect to the present application a restriction to $\Delta x = 1$ is sufficient. $D_u\Phi$ denotes the first-order upwind stencil, which is dependent on the normal direction of $\Phi$.

To guarantee numerical stability the temporal resolution of the above iterative scheme may be chosen with respect to the corresponding Courant-Friedrichs-Lewy condition. To terminate the iterative scheme one can check for changes of the contour location between two reinitialization steps. To avoid infinite loops between different states of contour position the iteration counts should be limited to a predeterminable value. In practical applications, a number N of iteration counts of, for instance, $300 < N < 600$ should in many cases yield satisfactory results. In case the algorithm converges, automatic abortion may be effected regardless of the actual number of iteration counts.

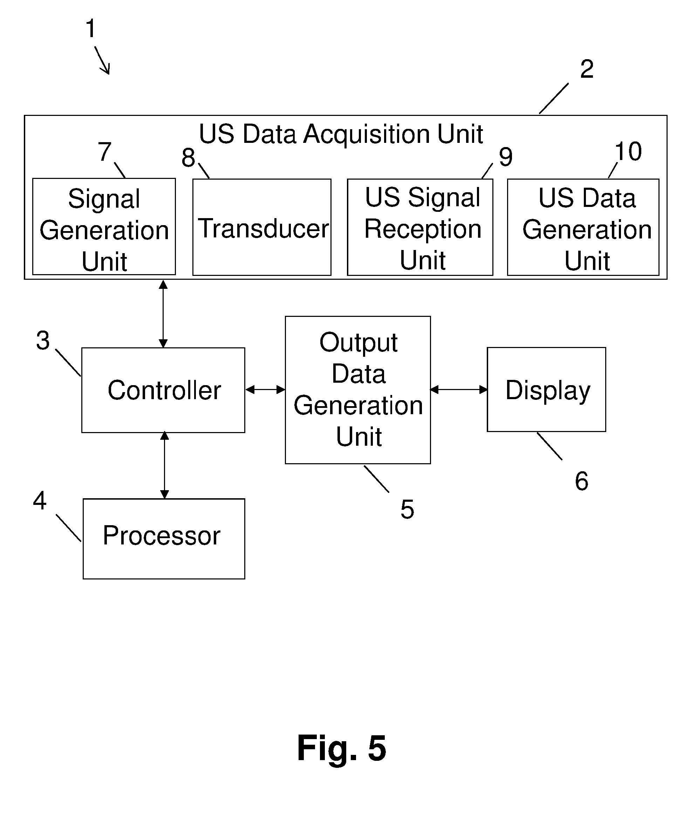

The following description relates to an ultrasound imaging system. However, it is expressly noted that the present invention is not restricted to this technique, but can be suitably applied in connection with numerous different imaging techniques although, as explained above, the advantages are particularly striking in ultrasound image segmentation. Fig. 5 is a schematic view of an ultrasound (US) imaging system 1 according to an embodiment of the present invention. The system 1 comprises a US data acquisition unit 2, a controller 3, a processor 4, an output data generation unit 5 and a display 6.

The US data acquisition unit 2 comprises a signal generation unit 7, being configured to provide signals, which is adapted to the respective imaging objective and which can be applied to one or more transducers 8. The transducers 8 are configured to transform these signals into US signals and to transmit them to the target object to be imaged. A US signal reception unit 9 receives the ultrasound echo signals reflected from the target object. From these signals, the US data generation unit 10 forms the digital image data of the target object.

In accordance with the present invention the processor 4 is operable to determine a noise-dependent intensity threshold $t_d$ for separating two intensity classes $C_0$ and $C_1$, and to calculate a segmentation contour $C$ by means of a level set equation, wherein the corresponding velocity vector $\vec{v}$ that determines the movement of said segmentation contour *C* takes into consideration the deviation of said intensity values *I* from said noise-dependent intensity threshold $t_d$. More specifically, the processor 4 may be operable to perform any of the steps described in detail above.

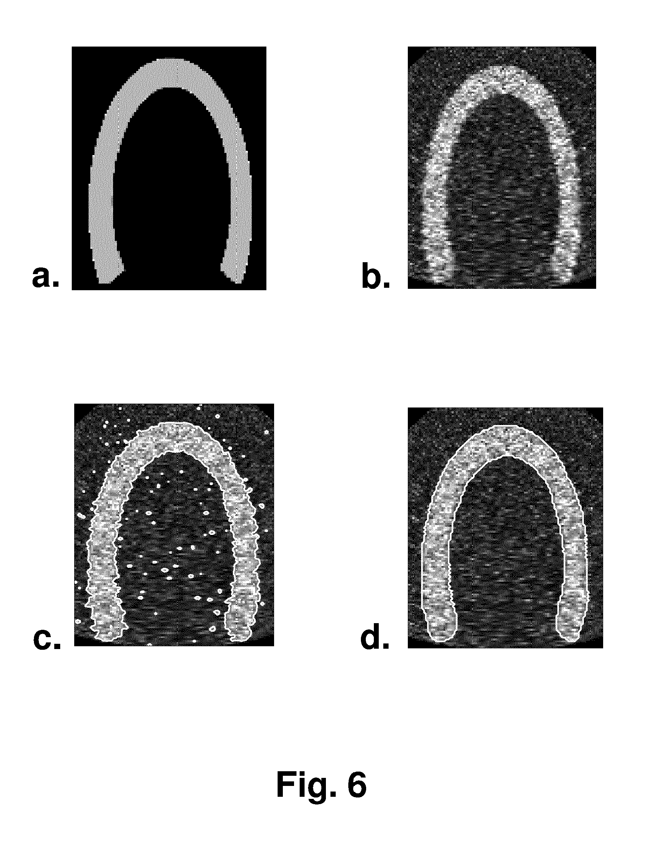

In the following first experimental results of image segmentation by using a method according to the present invention are presented. To this end, synthetic data generated by an ultrasound software phantom as well as real echocardiographic 2D and 3D ultrasound patient data have been employed. Regarding the software phantom, the ultrasound simulator described in Perreault, C., Auclier-Fortier, M.-F.: Speckle Simulation Based on B-Mode Echographic Image Acquisition Model. In: 4th Canad. Conf. Comp. and Robot Vis., pp. 379-386, 2007 was implemented and extended to simulate speckle noise. A 2D phantom image of the left ventricle was generated (Fig. 6a) and a realistic noise distribution was added in accordance with the expert opinion of echocardiographers (Fig. 6b).

Fig. 6d demonstrates that the method according to the present invention chooses an appropriate threshold based on the discriminant analysis. In contrast to the Chan-Vese algorithm (Fig. 6c) the method according to the present invention is capable of finding the right contour in the presence of speckle noise without classifying speckles in the background as tissue. In this example $\alpha = 0.4$ was chosen to achieve a smooth contour.

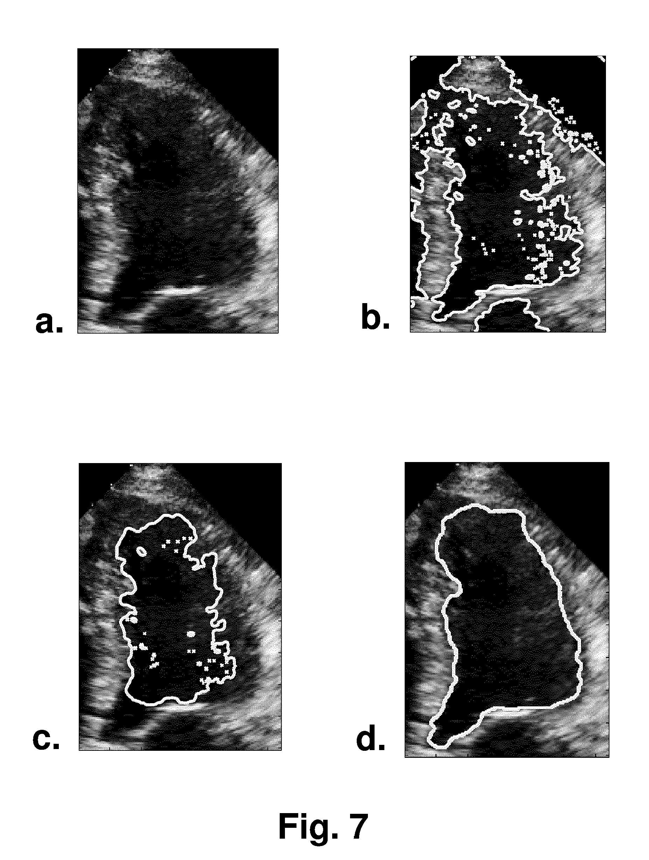

To validate the present approach on real medical data several 2D B-mode ultrasound images of the left ventricle in end systole from a Philips iE33 ultrasound system were chosen. Fig. 7a shows the real data, whereas Figs. 7b and 7c depict two example segmentation results obtained by using the Chan-Vese algorithm with low and high regularization parameters ($\mu = 0.05$ and $\mu = 0.4$, respectively). As expected and as explained above, no parameter setting produced a satisfying result due to the fact that the fixed and noise-independent threshold $t_c$ provokes erroneous separation of the two signals.

Fig. 7d demonstrates the result of applying the method according to the present invention for $\alpha = 0.6$. It can be clearly seen that the level set formulation according to the invention leads to satisfying results on noisy ultrasound images, though the contrast of the used data is relatively low and there are no clear endocardial contours. This can be seen especially in the apical part of the LV. Once again it is noted that the achieved high quality results from the consideration of the multiplicative nature of noise when dealing with ultrasound data. The inferior results obtained by using the Chan-Vese algorithm as a representative example clearly show that ignoring this fundamental fact and implicitly assuming an additive noise model tends to produce worse segmentation results.

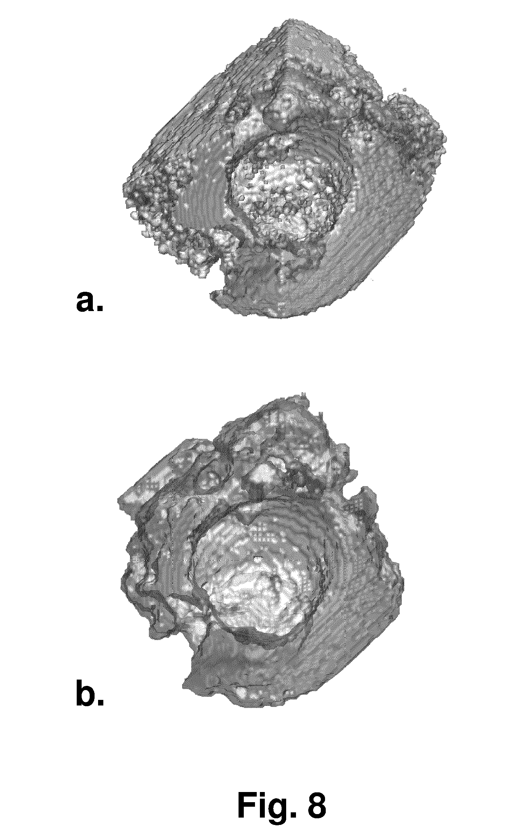

The method according to the invention was also tested on real 3D data from an echocardiographic TEE examination of the left atrium captured with a Philips iE33 ultrasound system. Figs. 8a and 8b illustrate the segmentation results of a 96x113x90 voxel 3D dataset. The result obtained in accordance with the present invention shows more delineated edges and more consistent anatomical structures compared to the Chan-Vese approach.

It is noted that it is also possible to apply the method according to the invention to segment 4D datasets in order to improve anatomical consistency of segmentation over time. In particular, this allows tackling effects like shadowing and low contrast boundaries, which are not easy to handle without temporal information.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for image segmentation, in particular ultrasound image segmentation, comprising:

   acquiring an image data set that comprises intensity values *I* for an array of pixels representing said image, wherein said image data originates from two or more different signal sources that respond with different signal intensity distributions, **characterized** i n the further steps of
   determining noise-dependent intensity thresholds $t_d$ for separating said intensity values *I* in individual classes $C_i$, with each class $C_i$ corresponding to a particular of said different signal intensity distributions,
   calculating segmentation contours *C* by means of level set equations, wherein the corresponding velocity vectors $\vec{v}$ that determine the movement of said segmentation contours *C* depend on the deviation of said intensity values *I* from said noise-dependent intensity thresholds $t_d$.

2. Method according to claim 1, wherein said intensity values *I* for the array of pixels representing said image comprise a multiplicative noise component.

3. Method according to claim 1 or 2, wherein said noise-dependent intensity threshold $t_d$ is determined in such a way that the within-class variance is minimized and the between-class variance is maximized.

4. Method according to any of claims 1 to 3, wherein said noise-dependent intensity threshold $t_d$ is determined by way of discriminant analysis.

5. Method according to any of claims 1 to 4, wherein said segmentation contour C is evolved over time as zero-level set of an auxiliary function $\Phi$ having a higher dimension than said array of pixels representing said image.

6. Method according to any of claims 1 to 5, wherein the distance of a pixel's intensity value to said noise-dependent intensity threshold $t_d$ is incorporated into a transfer function $\Psi$ which forces said segmentation contour C to expand and/or contract.

7. Method according to any of claims 1 to 6, wherein the smoothness of said segmentation contour C is controlled by introducing a weighting factor for the mean curvature K of said segmentation contour C.

8. Method according to any of claims 1 to 7, wherein said level set equation is solved by means of numerical discretization and a predetermined number of iterations.

9. Method according to any of claims 1 to 8, wherein the array of pixels representing said image is a 2-dimensional or a 3-dimensional array of pixels.

10. Method according to any of claims 1 to 8, wherein the array of pixels representing said image is a 4-dimensional array of pixels including temporal information.

11. Method according to any of claims 1 to 10, wherein said image is a chardiographic ultrasound image, in particular an image of a patient's myocardium.

12. System for image segmentation, in particular ultrasound image segmentation, comprising means for acquiring an image data set that comprises intensity values I for an array of pixels representing said image, wherein said image data originates from two or more different signal sources that respond with different signal intensity distributions, **characterized** i n that the system further comprises a processor (4) operable to determine noise-dependent intensity thresholds $t_d$ for separating said intensity values I in individual classes $C_i$, with each class $C_i$ corresponding to a particular of said different signal intensity distributions, and to calculate segmentation contours C by means of level set equations, wherein the corresponding velocity vectors $\vec{\nu}$ that determine the movement of said segmentation contours C depend on the deviation of said intensity values I from said noise-dependent intensity thresholds $t_d$.

13. System according to claim 12, wherein the means for acquiring an image data set include an ultrasound data acquisition unit (2).

14. System according to claim 12 or 13, further comprising means for generating and displaying an output data set (5, 6), wherein pixels within said evolved segmentation contour C are displayed in a first color and pixels without said evolved segmentation contour C are displayed in a second color.

15. Computer program product, comprising program instructions stored on a computer-readable medium for effecting the performance of the method according to any one of claims 1 to 11, when the program code is executed on a computer.

Fig. 1

Fig. 2

Fig. 3

Fig. 4

**Fig. 5**

a.

b.

c.

d.

Fig. 6

a. b. c. d.

Fig. 7

a.

b.

Fig. 8

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/118136 A1 (CAI WENLI [US] ET AL) 22 May 2008 (2008-05-22) | 1,2,5-15 | INV. G06T7/00 |
| Y | * abstract * <br> * page 1 - page 10 * | 3,4 | |
| Y | HIRANSAKOLWONG N ET AL: "FASU:a full automatic segmenting system for ultrasound images", APPLICATIONS OF COMPUTER VISION, 2002. (WACV 2002). PROCEEDINGS. SIXTH IEEE WORKSHOP ON 3-4 DEC. 2002, PISCATAWAY, NJ, USA,IEEE, 3 December 2002 (2002-12-03), pages 90-94, XP010628730, ISBN: 978-0-7695-1858-9 * sections 1, 3 * | 3,4 | |
| A | OTSU N: "A THRESHOLD SELECTION METHOD FROM GRAY-LEVEL HISTOGRAMS", IEEE TRANSACTIONS ON SYSTEMS, MAN AND CYBERNETICS, IEEE INC. NEW YORK, US, vol. 9, no. 1, 1 January 1979 (1979-01-01) , pages 62-66, XP000617438, ISSN: 0018-9472 * the whole document * | 1-15 | TECHNICAL FIELDS SEARCHED (IPC) <br><br> G06T |
| A | JUN ZHANG ET AL: "The detection of multiple moving objects using fast level set method", NEURAL NETWORKS, 2008. IJCNN 2008. (IEEE WORLD CONGRESS ON COMPUTATIONAL INTELLIGENCE). IEEE INTERNATIONAL JOINT CONFERENCE ON, IEEE, PISCATAWAY, NJ, USA, 1 June 2008 (2008-06-01), pages 1440-1444, XP031327722, ISBN: 978-1-4244-1820-6 * section III * | 1-15 | |

-/--

The present search report has been drawn up for all claims

| Place of search | Date of completion of the search | Examiner |
|---|---|---|
| Munich | 20 July 2012 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 12 16 1559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | TONY F CHAN ET AL: "Active Contours Without Edges", IEEE TRANSACTIONS ON IMAGE PROCESSING, IEEE SERVICE CENTER, PISCATAWAY, NJ, US, vol. 10, no. 2, 1 February 2001 (2001-02-01), XP011025732, ISSN: 1057-7149 * the whole document * | 1-15 | |
| A,D | LUMINITA A VESE ET AL: "A Multiphase Level Set Framework for Image Segmentation Using the Mumford and Shah Model", INTERNATIONAL JOURNAL OF COMPUTER VISION, KLUWER ACADEMIC PUBLISHERS, BO, vol. 50, no. 3, 1 December 2002 (2002-12-01), pages 271-293, XP019216376, ISSN: 1573-1405, DOI: 10.1023/A:1020874308076 * the whole document * | 1-15 | |
| A | KITTLER J ET AL: "Minimum error thresholding", PATTERN RECOGNITION, ELSEVIER, GB, vol. 19, no. 1, 1 January 1986 (1986-01-01), pages 41-47, XP002090977, ISSN: 0031-3203, DOI: 10.1016/0031-3203(86)90030-0 * the whole document * | 1-15 | TECHNICAL FIELDS SEARCHED (IPC) |

The present search report has been drawn up for all claims

| Place of search | Date of completion of the search | Examiner |
|---|---|---|
| Munich | 20 July 2012 | Katartzis, Antonios |

EPO FORM 1503 03.82 (P04C01)

**ANNEX TO THE EUROPEAN SEARCH REPORT
ON EUROPEAN PATENT APPLICATION NO.**                    EP 12 16 1559

This annex lists the patent family members relating to the patent documents cited in  the above-mentioned European search report.
The members are as contained in the European Patent Office EDP file on
The European Patent Office is in no way liable for these particulars which are merely given for the purpose of information.

20-07-2012

| Patent document cited in search report | Publication date | Patent family member(s) | Publication date |
|---|---|---|---|
| US 2008118136    A1 | 22-05-2008 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OSHER, S. ; SETHIAN, J.A.** Fronts Propagating with Curvature-Dependent Speed: Algorithms Based on Hamilton-Jacobi Formulations. *J. Comp. Phys.,* 1988, vol. 79, 12-49
- **CHAN, T.F. ; VESE, L.A.** Active Contours Without Edges. *IEEE-TIP,* 2001, vol. 10 (2), 266-277
- **T. CHAN ; T. VESE.** A multiphase level set framework for image segmentation using the Mumford and Shah Model. *Int. Journal of Computer Vision,* 2002, vol. 50 (3), 271-293
- **OTSU, N.** A Threshold Selection Method from Gray-Level Histograms. *IEEE-TSMC,* 1979, vol. 9 (1), 62-66
- **OSHER, S. ; FEDKIW, R.P.** Level Set Methods and Dynamic Implicit Surfaces. Springer-Verlag, 2003
- **PERREAULT, C. ; AUCLIER-FORTIER, M.-F.** Speckle Simulation Based on B-Mode Echographic Image Acquisition Model. *4th Canad. Conf. Comp. and Robot Vis.,* 2007, 379-386